# EUROPEAN PATENT APPLICATION

(11) **EP 3 015 435 A1**
(43) Date of publication of application: **04.05.2016**
(21) Application number: 14468008.9
(22) Date of filing: 30.10.2014
(51) Int. Cl.: C02F 9/00, C02F 1/32, C02F 1/36

(54) **Device for reducing microbial contamination of waste water without reagents**

(71) Applicant: ZEL-EN, razvojni center energetike, 8270 Krsko (SI)
(72) Inventor: Ogorevc, Breda, 8250 Brezice (SI); Danijel, Ostir, 8270 Krsko (SI); Dusan, Rangus, 8310 Sentjernej (SI); Domen, Zorko, 8270 Krsko (SI); Boris, Laptev, 1000 Ljubljana (SI); Sidorenko, Galina, 1000 Ljubljana (SI)

(57) **Abstract**

The invention concerns to devices for decontamination of waste water, technological and other waters without reagents and can be used in various industrial fields, including agriculture, food industry and so on.

The device includes a minimum of 2 connected chambers of cylindrical shape, each of which contains the ultrasonic transducers and an ultraviolet emitter.

In the chambers the ultrasonic frequencies differ by 10 kHz or more, and in the first chamber the ultrasonic frequency is lower than in the second chamber.

To facilitate the release of associated gas the chambers are arranged vertically. UV lamps are placed in quartz tube.

The distance between the outer surface of the quartz tubes and the inner surface of the chamber does not exceed two maximum particle size in a liquid.

These parameters of devices increases the effectiveness of decontamination wastewaters having bad transparency and containing a large amount of particles of different sizes.

The device includes a circulation loop, which allows fluid to pass several times through the device. It also improves the efficiency of the device and to reduces the content of microorganisms in different liquids.

## Description

### Area of technics

Subject of the invention is the device for decontamination of waste water, technological and other waters without reagents and can be used in various industrial fields, including agriculture, food industry.

The apparatus includes a minimum of 2 consecutive interconnected chambers of cylindrical shape, each of which contains the ultrasonic transducers and an ultraviolet emitter.

In the chambers the ultrasonic frequencies differ by 10 kHz or more, and in the first chamber the ultrasonic frequency is lower than in the second chamber.

To facilitate the release of associated gas the chambers are arranged vertically. UV lamps are placed in quartz tube.

Spacing between the outer surface of the quartz tubes and the inner surface of chamber does not exceed two the maximum size of particles in the treated liquid.

These parameters of devices increases the effectiveness of decontamination waste waters having poor transparency and containing a large amount of particles of different sizes.

The device includes a circulation loop, which allows fluid to pass several times through the device. It also improves the efficiency of the device and reduces the content of microorganisms in liquids.

**It is known** the device for reducing microbial contamination of waste water without reagents. In this device the waste water is heated in heat exchangers to a temperature of 50-60°C and then the water is heated to 120-140°C, and decontaminated for 3-5 minutes [1].

Disadvantage of this devices is the high energy consumption.

**It is known** the device for reagent-free decontamination of wastewater [2], which includes a flow chamber and ultraviolet emitters with the protective cover. In this device between the outer surface of the protective cover and the inner surface of the chamber is a space, which sufficient for passing the water to be treated.

The disadvantage of this method is fouling of protective covers of ultraviolet emitters. This leads to the need to stop the equipment for cleaning covers with using chemical and physical methods. Moreover, there is not information about distance between the outer surface of protective covers ultraviolet emitters and the inner side of the chamber. The magnitude of this distance is important for evaluating the effectiveness of decontamination and for optimization this technology. It is important particularly for waste water, which have the bad transparency and contain a large amount of particles of different sizes. In patent also lacks data on the effectiveness of wastewater disinfection.

**It is known devices and methods** for cleaning and decontamination of various water, including waste water, in which ultrasonic treatment and UV exposure are used consistently [3-8]. One of these methods is method for non-reagent decontamination of various water, including the waste water [3]. This method includes ultrasonic radiation with frequency of 25 kHz, followed ultraviolet radiation and filtration. The duration of ultrasonic radiation is 1-2 seconds, and the duration of ultraviolet radiation is 3 seconds.

The disadvantage of these devices and methods is that the waste water is subjected to ultrasonic treatment and UV irradiation consistently. This device does not prevent deposition substances on the surface of protective cover of ultraviolet emitter. This reduces the transparency of the protective cover and leads to the need to stop the equipment for cleaning covers of ultraviolet emitters with using chemical and physical methods.

Furthermore, the absence of the simultaneous action of two damaging factors - ultrasonic treatment and ultraviolet irradiation reduces the effectiveness of decontamination.

**The most similar** to the proposed device is the device for waste water treatment [9] in which simultaneous effect of ultrasonic radiation, ultraviolet radiation and ozone is used.

Disadvantage of these device is that the ultraviolet radiation and ultrasonic radiation acts on waste water singly and with using only one ultrasonic frequency. This reduces the effectiveness of the decontamination.

Moreover there is not information about the distance between the outer surface of protective covers ultraviolet emitters and the inner side of the camber. The magnitude of this distance is important for evaluating the effectiveness of decontamination and for optimization this technology. It is important particularly for waste water, which have a bad transparency and contain a large amount of particles of different sizes.

**Claimed device** has at least two series-connected chambers of cylindrical shape, each of which contains the ultrasonic transducers and an ultraviolet emitter.

Use of ultraviolet emitter in both chambers slightly raises the power consumption, but considerably reduces, number of bacteria in liquids. On our data the number of bacteria in this case is reduced by 2 times.

The frequencies of the ultrasonic transducers in the chambers differ by 10 kHz or more, while in the first chamber ultrasonic frequency is lower than in the second chamber.

It is known that increasing the frequency of ultrasound reduces the size of the cavitation bubbles [10], which leads to change in their action on the liquids and particles. In our experiments, it was demonstrated that by passing the fluid through the first chamber and then through the second chamber the number of microorganisms is reduced by 50% compared with the reverse sequence of passing the fluid through the chambers.

Chambers in the proposed device are arranged vertically. This prevents the formation of deposits on the walls of the quartz tubes and facilitates the exit of gases which accumulating in device.

Chambers in the proposed device are cylindrical in shape. Inside the chambers is located ultraviolet emitters, around which are located quartz tubes. Processed fluid moves upward in the space between the outer surface of the quartz tubes and the inner surface of the chamber.

The distance between the outer surface of the quartz tubes and the inner surface of the chamber does not exceed two maximum particle size in a liquid. This distance allows to obtain the maximum possible effect of ultraviolet radiation on microorganisms in liquids which have a poor transparency and containing many particles.

The presence of the circulation loop allows fluid to pass repeatedly through the proposed device. It also improves the efficiency of the device and allow to reduce the content of microorganisms in the waste water.

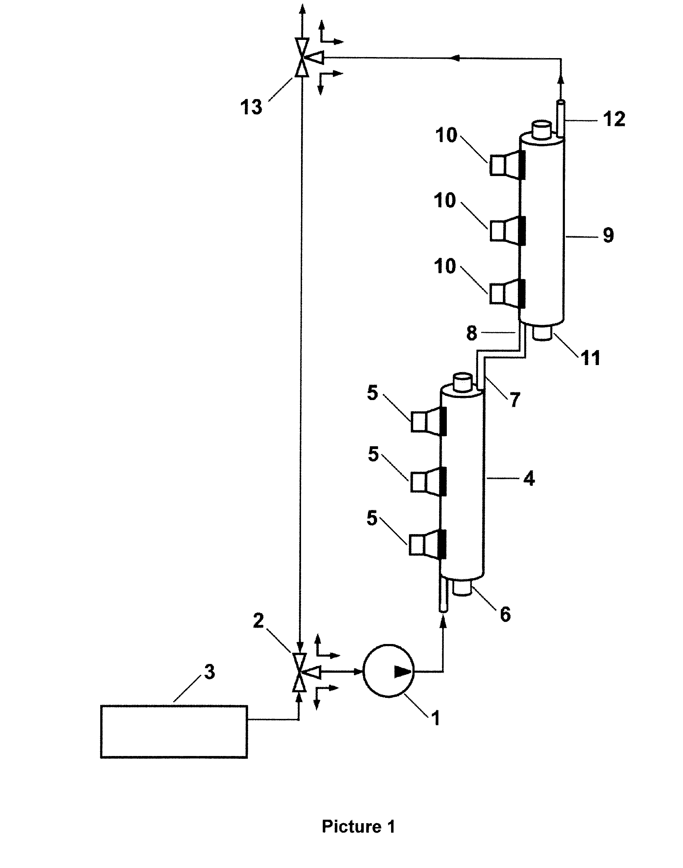

**Figure 1** shows the block diagram of the proposed device.

The system has a pump (1) which sucks contaminated liqud from the reservoir (3) through a two way valve (2) to the first chamber (4). The first chamber (4) has the ultrasonic transducers (5) with a frequency of 30 kHz and ultra-violet emitter (6). The output (7) of the first chamber (4) is connected to the inlet (8) of the second chamber (9), which also includes the ultrasonic transducers (10) with a frequency of 40 kHz and ultra-violet emitter (11). The output (12) of the second chamber (9) is connected to a two way valve (13). By controlling two-way valves (13 and 2) the liquid for decontamination could be drained out of the system or may circulate through the chambers (4 and 9).

### REFERENCE

1. Patent RU N 952773 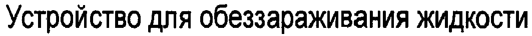 // 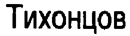 A.M., 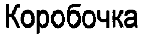 A.H., 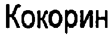 A.B., et al.
2. Patent RU N 2091319 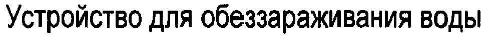 // 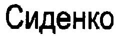 B. 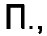 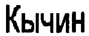 B. 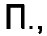 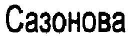 E. 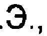 et al.
3. Patent RU N 2092448 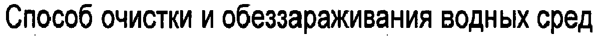 // 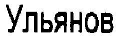 A.H., 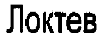 O.A., 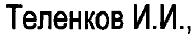 et al.
4. Patent RU N 2089516 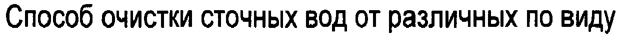 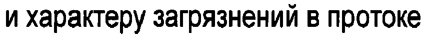 // 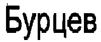 B.A.
5. Patent RU N 2116264 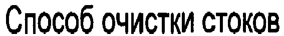 // 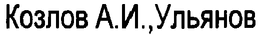 A.H., 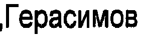 O.A.
6. Patent US5679257 Industrial waste water treatment // Robert B. Coate, Towles John T.
7. Patent US5130032 A Industrial toxic waste water, oxidation with ozone, sonic vibration // Sartori Helfred E.
8. Patent WO 2009123582A1 System and method for reducing waste water contaminants // Spielman Rick B. , Summers Link E.
9. Patent WO 2013155283 A1 Reactor for water treatment and method thereof // Medvedev D. D.
10. M.A. 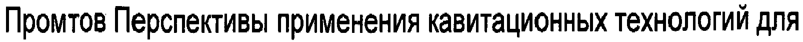 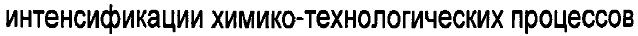 // 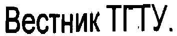 2008. TOM 14. Nº 4. C. 861-869.

## Claims

1. For the device for reducing microbial contamination of waste water without reagents, which includes ultrasonic transducers and an ultraviolet emitter is typical
that the device contains at least two connected chambers the cylindrical shape, each of which contains the ultrasonic transducers and an ultraviolet emitter, but the frequency of the ultrasonic transducers in the chambers differ by 10 kHz or more.

2. For the device according to the claim 1,
is typical
that the frequency of the ultrasonic transducers in the first chamber is lower than in the second chamber.

3. For the device according to the claim 1,
is typical
that the chambers are arranged vertically.

4. For the device according to the claim 1,
is typical
that the distance between the outer surface of the quartz tubes and the inner surface of the chamber does not exceed two maximum particle size in a liquid.

5. For the device according to the claim 1,
is typical
that the device contains a circulation loop.

## Amended claims

### Amended claims in accordance with Rule 137(2) EPC.

1. The device for reducing microbial contamination of waste water without reagents comprising ultrasonic transducers and an ultraviolet emitters with outer quartz tube, wherein the device comprising at least two connected chambers, each of which contains the ultrasonic transducers and an ultraviolet emitter, but the frequency of the ultrasonic transducers in the first chamber is lower by 10 kHz or more than in the second chamber.

2. The device for reducing microbial contamination of waste water without reagents according to claim 1, wherein the chambers have the cylindrical shape.

3. The device for reducing microbial contamination of waste water without reagents according to claim 2, wherein the distance between the outer surface of the outer quartz tube of the ultraviolet emitter and the inner surface of the chamber does not exceed two maximum size of particles in a liquid.

4. The device for reducing microbial contamination of waste water without reagents according to claim 2, wherein the chambers are arranged vertically.

5. The device for reducing microbial contamination of waste water without reagents according to claim 1, wherein the device comprises a circulation loop.
